# EUROPÄISCHE PATENTANMELDUNG

(11) **EP 3 940 927 A1**
(43) Veröffentlichungstag der Anmeldung: **19.01.2022**
(21) Anmeldenummer: 21185390.8
(22) Anmeldetag: 13.07.2021
(51) Int. Cl.: H02K 3/50, H02K 11/30, H02K 5/22, H02K 11/33, H01R 4/2416, H01R 4/242

(54) **ANTRIEBSVORRICHTUNG, INSBESONDERE FÜR EIN VERDICHTERSYSTEM ZUR DRUCKLUFTERZEUGUNG BEI EINER FAHRZEUGBREMSE**

(30) Priorität: 13.07.2020 LU 101924
(71) Anmelder: adcos GmbH, 50969 Köln (DE)
(72) Erfinder: Kubina, Stefan, 50935 Köln (DE)
(74) Vertreter: Hoffmann, Jürgen

(57) **Zusammenfassung**

Die Erfindung betrifft eine Antriebsvorrichtung mit einem Elektromotor, der in einem Elektromotorgehäuse angeordnet ist, und mit einem Steuergerät, die in einem Steuergerätgehäuse außerhalb des Elektromotorgehäuses angeordnet ist. Die Antriebsvorrichtung zeichnet sich dadurch aus, dass an der Innenseite des Elektromotorgehäuses ein Leitungselementaufnahmebauteil angeordnet ist, das mehrere Leitungskanäle aufweist, durch die jeweils ein elektrisches Leitungselement, insbesondere jeweils ein Wicklungsdraht des Elektromotors, verläuft, wobei in jeden der Leitungskanäle jeweils ein durch eine Öffnung des Elektromotorgehäuses ragendes elektrisch leitendes Kontaktelement ragt, das an seinem freien Ende wenigstens zwei Zinken aufweist, zwischen denen das jeweilige elektrische Leitungselement eingeklemmt ist.

## Beschreibung

Die Erfindung betrifft eine Antriebsvorrichtung mit einem Elektromotor, der in einem Elektromotorgehäuse angeordnet ist, und mit einem Steuergerät, die in einem Steuergerätgehäuse außerhalb des Elektromotorgehäuses, insbesondere unmittelbar auf oder unmittelbar an dem Elektromotorgehäuse, angeordnet ist.

Zur Steuerung von Elektromotoren, insbesondere hinsichtlich Drehzahl und/oder Antriebsleistung, werden elektronische Steuergeräte verwendet. Es gibt Antriebsvorrichtung, bei denen das Steuergerät ein eigenes Steuergerätgehäuse aufweist, das außerhalb des Elektromotorgehäuses eines Elektromotors angeordnet ist.

Aus DE 10 2011 112 821 A1 ist ein Kühlerlüftermotor eines Kraftfahrzeugs mit einem eine Drehfeldwicklung tragenden Stator und mit einem gegenüber diesem drehbar gelagerten Rotor sowie mit einer Umrichterelektronik bekannt. Auf einer Leiterplatte ist eine Anzahl von Kontaktelementen für isolationsfreie oder lackisolierte Anschlusskontakte mindestens eines Bauelementes der Umrichterelektronik und/oder für lackisolierte Wicklungsenden der Drehfeldwicklung montiert. Die Kontaktelemente sind als Klemm- oder Schneidklemmkontakte ausgebildet.

Aus US 2018 0367008 A1 ist ein Motor bekannt, dessen Stator mittels eines dreiadrigen Anschlusskabels, das an den Enden mit Steckverbindern versehen ist, an eine externe Stromquelle angeschlossen ist.
Es ist die Aufgabe der vorliegenden Erfindung, eine Antriebsvorrichtung anzugeben, die eine besonders sichere und zuverlässige elektrische Anbindung des Steuergeräts an den Elektromotor aufweist, wobei ein einfacher Zusammenbau ermöglicht ist.

Die Aufgabe wird durch eine Antriebsvorrichtung gelöst, die dadurch gekennzeichnet ist, dass an der Innenseite des Elektromotorgehäuses ein Leitungselementaufnahmebauteil angeordnet ist, das mehrere Leitungskanäle aufweist, durch die jeweils ein elektrisches Leitungselement, insbesondere jeweils ein Wicklungsdraht des Elektromotors, verläuft, wobei in jeden der Leitungskanäle jeweils ein durch eine Öffnung des Elektromotorgehäuses ragendes elektrisch leitendes Kontaktelement ragt, das an seinem freien Ende wenigstens zwei Zinken aufweist, zwischen denen das jeweilige elektrische Leitungselement eingeklemmt ist.

Die erfindungsgemäße Antriebsvorrichtung hat den ganz besonderen Vorteil, dass sie eine elektrische Anbindung des Steuergeräts an einen, insbesondere dreiphasigen, Elektromotor ermöglicht, die besonders sicher und zuverlässige ist und die dennoch durch einfaches Stecken und Schrauben hergestellt werden kann. Hierbei ist es von ganz besonderem Vorteil, dass bei dem Vorgang der mechanischen Ankopplung des Steuergeräts auch gleichzeitig automatisch die elektrische Ankopplung in sicherer und zuverlässiger Weise erfolgt. Hierbei kann vorteilhaft insbesondere vorgesehen sein, dass das Steuergerätgehäuse beim Zusammenbau der Antriebsvorrichtung, insbesondere unbeweglich und/oder zerstörungsfrei wieder lösbar, an dem Elektromotorgehäuse befestigt wird.

Bei den elektrischen Leitungselementen kann es sich insbesondere um Wicklungsdrähte des Elektromotors handeln. Insbesondere kann es sich um Wicklungsdrähte handeln, die zu Statorspulen aufgewickelt sind. Auf diese Weise kann vorteilhaft innerhalb des Elektromotorgehäuses auf zusätzliche separate Leitungen zum Anschließen des Elektromotors und damit auch auf zusätzliche elektrische Anschlüsse verzichtet werden. Vielmehr können die Wicklungsdrähte unmittelbar selbst über die Kontaktelemente von außen kontaktiert werden, was den Herstellungsaufwand reduziert und Vorteilhaft für die Zuverlässigkeit ist. Es ist alternativ jedoch nicht ausgeschlossen und durchaus möglich, dass es sich bei den Leitungselementen um zusätzliche Leitungen, insbesondere Drähte, handelt, die mit den Wicklungsdrähten des Elektromotors, insbesondere des Stators des Elektromotors, elektrisch leitend verbunden sind.

Ganz allgemein kann insoweit vorgesehen sein, dass mehrere der Leitungselemente, insbesondere genau drei der Leitungselemente, Wicklungsdrähte des Elektromotors sind oder Leitungen, insbesondere Drähte, sind, die mit den Wicklungsdrähten des Elektromotors, insbesondere des Stators des Elektromotors, elektrisch leitend verbunden sind. Alternativ oder zusätzlich kann vorgesehen sein, dass mehrere (weitere) der Leitungselemente, insbesondere genau zwei der Leitungselemente, Signalleitungen sind. Bei einer ganz besonders vorteilhaften Ausführung sind drei der Leitungselemente Wicklungsdrähte des Elektromotors, während zwei (weitere) der Leitungselemente Signalleitungen sind, die insbesondere zum Anschluss eines Sensors, insbesondere eines Temperatursensors, dienen.

Es ist es insoweit erfindungsgemäß ermöglicht, außer dem Elektromotor gleichzeitig weitere Komponenten, wie beispielsweise einen Sensor, insbesondere einen Temperatursensor, der sich in dem Elektromotorgehäuse befindet, sicher und zuverlässig an das Steuergerät anzukoppeln.

Vorzugsweise sind die Kontaktelemente in einem Steckergehäuse fixiert. Durch das Steckergehäuse wird vorteilhaft erreicht, dass die Kontaktelemente gemeinsam einfach gehandhabt werden können, wobei das Steckergehäuse samt den darin fixierten Kontaktelementen vorteilhaft wie ein Steckverbinder verwendet und montiert werden kann. Insbesondere kann vorteilhaft vorgesehen sein, dass das Leitungselementaufnahmebauteil eine Aufnahme aufweist, in die ein Vorsprung des Steckergehäuses formschlüssig und/oder klemmend und/oder rastend eingesteckt werden kann.

Das Leitungselementaufnahmebauteil und/oder das Steckergehäuse können insbesondere aus Kunststoff hergestellt sein. Insbesondere kann vorteilhaft vorgehsehen sein, dass das Leitungselementaufnahmebauteil und das Steckergehäuse jeweils als Kunststoffspritzgussteil hergestellt sind. Das Steckergehäuse kann beispielsweise in einem Kunststoffspritzgussverfahren hergestellt sein, bei dem ein Umspritzen der Kontaktelemente erfolgt.

Bei einer vorteilhaften Ausführung weist das Steckergehäuse wenigstens ein Verbindungselement, insbesondere ein Rastelement oder wenigstens einen Niet, auf, das mit einem Gegenverbindungselement des Leitungselementaufnahmebauteils zusammen wirkt, um das Steckergehäuse und das Leitungselementaufnahmebauteil, insbesondere durch das Elektromotorgehäuse hindurch, miteinander zu verbinden. Alternativ oder zusätzlich kann vorteilhaft vorgesehen sein, dass das Steckergehäuse wenigstens eine Schraubenaufnahme für eine Befestigungsschraube aufweist, die durch eine Bohrung in dem Elektromotorgehäuse verläuft und in das Leitungselementaufnahmebauteil eingeschraubt ist.

Die Kontaktelemente dienen dazu, eine elektrisch leitende Verbindung zwischen des Steuergeräts und den mit dem Elektromotor verbundenen Kabeln herzustellen. Hierbei kommen beispielsweise Versorgungsspannungen zwischen 200 Volt und 1.000 Volt in Betracht. Bei dem Elektromotor kann es sich insbesondere einen Synchronmotor und/oder einen Permanentmagnetmotor handeln.

Die Kontaktelemente können an ihren freien Enden jeweils als mehrere, insbesondere genau zwei, Paare von Zinken aufweisen, zwischen denen das jeweilige elektrische Leitungselement eingeklemmt wird. Durch das Vorsehen von mehreren Paaren von Zinken wird eine besonders sichere, dauerhafte und zuverlässige elektrische Verbindung hergestellt.

Bei den elektrischen Leitungselementen kann es sich insbesondere um Leitungselement handeln, die eine isolierende Ummantelung aufweisen. Insbesondere kann es sich beispielsweise um Kupferlackdrähte handeln.

Um beim Zusammenbau eine zuverlässige elektrische Verbindung zwischen dem elektrisch leitenden Kern des jeweiligen Kabels und dem zugeordneten Kontaktelement zuverlässig herstellen zu können, weisen die Zinken vorzugsweise jeweils eine, insbesondere zu dem Leitungselement hin ausgerichtete, Schneidkante oder jeweils eine, insbesondere zu dem Leitungselement hin gerichtete, Reibfläche auf. Hierdurch wird vorteilhaft erreicht, dass die isolierende Ummantelung beim Aufstecken des Kontaktelements auf das Leitungselement im Bereich der Zinken aufgeschnitten beziehungsweise abgerieben wird, so dass ein unmittelbarer elektrisch leitender Kontakt von dem Kontaktelement zu dem elektrisch leitenden Kern des Kabels hergestellt wird.

Vorzugsweise sind die Kontaktelemente aus einem Metall oder einer Metalllegierung hergestellt. Die Kontaktelemente können vorteilhaft eine, insbesondere metallische, Beschichtung aufweisen. Die Beschichtung kann insbesondere eine galvanisch aufgebrachte Beschichtung, beispielsweise eine galvanisch aufgebrachte Nickelbeschichtung oder ähnliches, sein. Auf diese Weise sind die Kontaktelemente besonders gut gegen äußere Einflüsse, geschützt. Außerdem kann auf diese Weise ein besonders niedriger Übergangswiderstand realisiert werden. Insbesondere können die Kontaktelemente eine galvanisch aufgebrachte Beschichtung aufweisen.

Die Kontaktelemente können vorteilhaft beispielsweise als Blechstanzteile und/oder als Blechwiegeteile hergestellt werden. Insbesondere kann vorteilhaft vorgesehen sein, dass jedes Kontaktelement einstückig aus einem einzigen Stück Rohmaterial, insbesondere aus einem Blech, hergestellt wird.

Ein Kontaktelement kann beispielsweise wie nachfolgend beschrieben durch Ausstanzen und Biegen hergestellt sein: Zunächst wird ein Stanzteil hergestellt, das im Wesentlichen H-förmig ausgebildet ist, wobei die beiden Schenkel des "H" zueinander identisch sind. Jeder Schenkel des H weist am unteren Ende wenigstens eine Zinke, insbesondere mehrere Zinken, auf. In einem nächsten Schritt erfolgt ein zweimaliges Umbiegen jedes Schenkels kurz oberhalb der Zinken. Dies kann insbesondere in der Weise erfolgen, dass jeder Schenkel an in Längsrichtung voneinander beabstandeten Stellen jeweils um ca. 90 Grad umgebogen wird, wobei Umbiegungen in entgegengesetzte Richtungen erfolgen. Anschließend werden die beiden Schenkel des "H" aufeinander gelegt, wobei der die Schenkel verbindende Abschnitt (Querstrich des H) um 180° umgebogen wird. Durch das zweimalige Umbiegen weisen Zinken der Schenkel im Endergebnis einen Abstand zueinander auf.

Wie bereits erwähnt kann vorteilhaft vorgesehen sein, dass ein Kontaktelement weist vorzugsweise an seinem freien Ende wenigstens zwei Zinken aufweist, zwischen denen innerhalb des Ankoppelelements eine Signalleitung eingeklemmt ist. Insbesondere kann vorteilhaft vorgesehen sein, dass genau zwei derartige Kontaktelemente jeweils an ihrem freien Ende wenigstens zwei Zinken aufweisen, zwischen denen jeweils eine Signalleitung, eingeklemmt ist. Die Signalleitungen können beispielsweise an einen in dem Elektromotorgehäuse angeordneten Sensor, insbesondere an einen Temperatursensor, angeschlossen sein.

Bei einer besonders vorteilhaften Ausführung weist jedes Kontaktelement an seinem anderen Ende wenigstens eine Schneide auf. Die Schneide erleichtert es, das andere Ende beispielsweise in einen Leiterplattensteckverbinder einzustecken. Zum Kontaktieren der Kontaktelemente an eine Platine des Steuergeräts kommen jedoch auch andere Ankoppelvarianten, wie beispielsweise Pressfit oder eine gelötete THT-Verbindung (Through Hole Technology) in Betracht, die auch ohne eine Schneide auskommen können.

Bei einer ganz besonders vorteilhaften Ausführung sind die Enden der Signalleitungen in einem Stecker fixiert, der in eine Steckeraufnahme des Ankoppelelements eingesteckt ist. Dies ermöglicht es auf besonders einfache Weise, zusätzliche elektrische oder elektronische Bauteile, die zusätzlich zu dem Elektromotor in dem Elektromotorgehäuse angeordnet sind (wie beispielsweise einen Sensor), an das Steuergerät anzuschließen. Durch die Verwendung eines Steckers, der in eine Steckeraufnahme des Ankoppelelements eingesteckt werden kann, ist es besonders einfach möglich, die weiteren Leitungselemente in die nötige Position zum Ankoppeln an die weiteren Ankoppelelemente zu bringen und dort zu halten.

Das Steuergerät kann insbesondere derart ausgebildet sein, dass alle wesentlichen elektronischen Bauteile auf einer einzigen Platine angeordnet sind. Eine solche Ausführung ermöglicht einen besonders schnellen, sicheren und einfachen Zusammenbau. Beispielsweise kann vorteilhaft vorgesehen sein, dass die Platine durch ein einfaches Aufstecken auf das Gegenankopplungselement montiert wird, nach dem bereits ein Teil des Steuergerätgehäuses mechanisch mit dem Elektromotogehäuse verbunden wurde, was weiter unten noch im Detail erläutert ist.

Die anderen Enden der Kontaktelemente können jeweils in einen Steckverbinder des Steuergeräts eingesteckt sein. Bei dem Steckverbinder kann es sich insbesondere jeweils um einen Leiterplattensteckverbinder handeln, der auf einer Platine, die elektronische Bauteile trägt, des Steuergeräts befestigt sind. Auf diese Weise werden vorteilhaft zusätzliche Leitungen, Drähte oder Kabel innerhalb des Steuergerätgehäuses vermieden. Außerdem wird so, wie oben bereits erwähnt, ein besonders schneller, sicherer und einfacher Zusammenbau ermöglicht.

Bei einer ganz besonders vorteilhaften Ausführung weist das Steckergehäuse eine erste Anlagefläche aufweist, die der Außenseite des Elektromotorgehäuses zugewandt ist. Außerdem kann das Steckergehäuse eine zweite Anlagefläche aufweisen, die der Außenseite des Steuergerätgehäuses zugewandt ist. Die erste Anlagefläche kann eine erste Nut aufweisen, in der eine erste Dichtung, insbesondere ein Dichtungsring, angeordnet ist. Ebenso kann die Anlagefläche kann eine zweite Nut aufweisen, in der eine zweite Dichtung, insbesondere ein Dichtungsring, angeordnet ist. Das Innere des Elektromotorgehäuses und das Innere des Steuergerätgehäuses sind durch die Dichtungen von der Außenumgebung drucktechnisch isoliert, so dass ein Druckunterschied von mehreren Bar möglich ist.

Das Steuergerät kann einen Wechselrichter beinhalten, um eine Gleichspannung, beispielsweise einer Fahrzeugbatterie, in eine Wechselspannung zum Betreiben des Elektromotors umzusetzen. Der Wechselrichter kann insbesondere ein Dreiphasen-Wechselrichter sein, der dazu ausgebildet ist, einen Gleichstrom in einen Dreiphasenwechselstrom umzusetzen.

Die erfindungsgemäße Antriebsvorrichtung kann ganz insbesondere Teil eines Verdichtersystems zur Drucklufterzeugung sein, das eine Pumpe, insbesondere eine Hubkolbenpumpe beinhaltet. Die erfindungsgemäße Antriebsvorrichtung kann hierbei dazu dienen, die Pumpe anzutreiben, um Druckluft zu erzeugen. Die Druckluft kann insbesondere zum Betreiben einer Druckluftbremse, insbesondere einer Kraftfahrzeugbremse, verwendet werden.

Von ganz besonderem Vorteil ist ein Bremssystem für ein Kraftfahrzeug, das eine erfindungsgemäße Antriebsvorrichtung oder das oben erwähnte Verdichtersystem zur Drucklufterzeugung beinhaltet. Das Bremssystem kann insbesondere Teil eines Kraftfahrzeugs, insbesondere eines Lastkraftwagens, sein. Bei einer ganz besonders vorteilhaften Ausführung ist das Kraftfahrzeug als Elektrofahrzeug, insbesondere als elektrisch angetriebenes Straßenfahrzeug ausgebildet.

Das Kraftfahrzeug kann einen Wechselrichter beinhalten, um die Gleichspannung einer Fahrzeugbatterie in eine Wechselspannung zum Betreiben des Elektromotors umzusetzen, insbesondere wenn das Steuergerät der Antriebsvorrichtung keinen eigenen Wechselrichter aufweist. Der Wechselrichter kann insbesondere ein Dreiphasen-Wechselrichter sein.

Es ist auch möglich, dass die erfindungsgemäße Antriebsvorrichtung oder das oben erwähnte Verdichtersystem oder das oben erwähnte Bremssystem einen Wechselrichter zum Umsetzen von Gleichstrom, beispielsweise aus einer Fahrzeugbatterie, in einen Wechselstrom zum Betreiben des Elektromotors aufweist.

Allerdings ist es auch möglich, dass es sich bei dem Elektromotor um einen Gleichstrommotor handelt, so dass ein Wechseltrichter in diesem Fall nicht erforderlich ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Antriebsvorrichtung,
- Fig. 2 bis Fig. 8: jeweils eine Detailansicht eines zweiten Ausführungsbeispiels einer erfindungsgemäßen Antriebsvorrichtung,
- Fig. 9 und Fig. 10: jeweils eine Detailansicht eines dritten Ausführungsbeispiels einer erfindungsgemäßen Antriebsvorrichtung, und
- Fig. 11 bis Fig. 14: jeweils eine Detailansicht eines vierten Ausführungsbeispiels einer erfindungsgemäßen Antriebsvorrichtung.

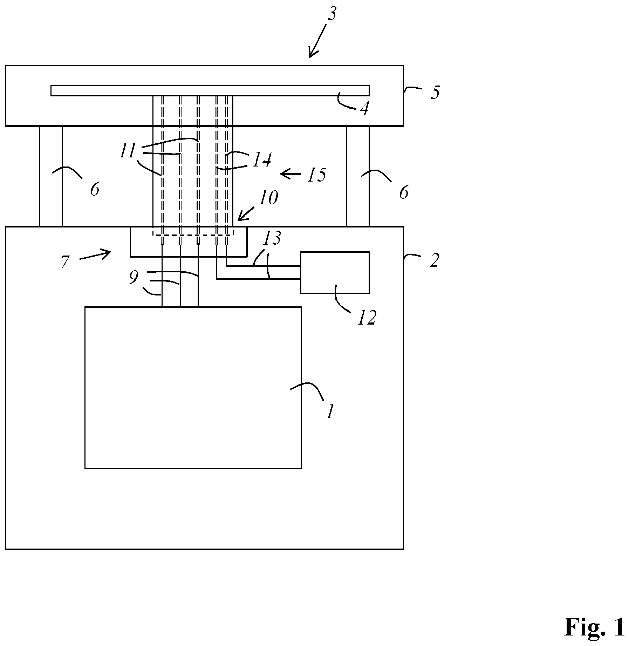

Figur 1 zeigt ein erstes Ausführungsbeispiel einer erfindungsgemäßen Antriebsvorrichtung mit einem Elektromotor 1, der in einem Elektromotorgehäuse 2 angeordnet ist. Die Antriebsvorrichtung weist ein Steuergerät 3 auf, die auf einer Platine 4 angeordnete (nicht dargestellte) elektronische Bauteile beinhaltet und die in einem Steuergerätgehäuse 5 angeordnet ist. Das Steuergerätgehäuse 5 ist mittels Befestigungsmitteln 6 an dem Elektromotorgehäuse 2 befestigt.

An der Innenseite des Elektromotorgehäuses 2 ist ein Leitungselementaufnahmebauteil 7 angeordnet, das mehrere (in Figur 1 nicht sichtbare) Leitungskanäle 8 aufweist, durch die jeweils ein an den Elektromotor 1 angeschlossenes elektrisches Leitungselement 9 verläuft und die jeweils durch einen zu dem jeweiligen Leitungskanal senkrechten (in Figur 1 nicht sichtbaren) Zugangskanal 18 verlaufen. Durch jeden der (in Figur 1 nicht sichtbaren) Zugangskanäle 18 verläuft ein durch eine Öffnung 10 des Elektromotorgehäuses 2 ragendes elektrisches Kontaktelement 11, das an seinem freien Ende jeweils in elektrisch leitendem Kontakt mit dem ihm zugeordneten elektrischen Leitungselement 9 ist.

Bei den elektrischen Leitungselementen 9 kann es sich insbesondere um Wicklungsdrähte des Elektromotors 1, insbesondere eines Stators des Elektromotors 1, handeln.

Innerhalb des Elektromotorgehäuses 2 befindet sich außerdem ein Sensor 12, der insbesondere ein Temperatursensor sein kann, der mittels weiterer elektrischer Leitungselemente 13 angeschlossen ist. Es sind weitere Kontaktelemente 14 vorhanden, die ebenfalls durch die Öffnung 10 des Elektromotorgehäuses 2 ragen und jeweils durch einen (nicht dargestellten) weiteren Zugangskanal 40 des Ankoppelelements 7 verlaufen und innerhalb des Ankoppelelements 7 leitend mit den Enden der weiteren elektrischen Leitungselemente 13 verbunden sind.

Die Kontaktelemente 11 und die weiteren Kontaktelemente 14 sind in einem Steckergehäuse 15 fixiert. Die Kontaktelemente 11 und die weiteren Kontaktelemente 14 sind hinsichtlich ihrer Längserstreckungsrichtung parallel zueinander angeordnet.

Auf der Platine 4 sind (in Figur 1 nicht dargestellte) Leiterplattensteckverbinder 16 angeordnet, in die die Kontaktelemente 11 sowie die weiteren Kontaktelemente 14 zur Herstellung jeweils einer leitenden Verbindung eingesteckt sind.

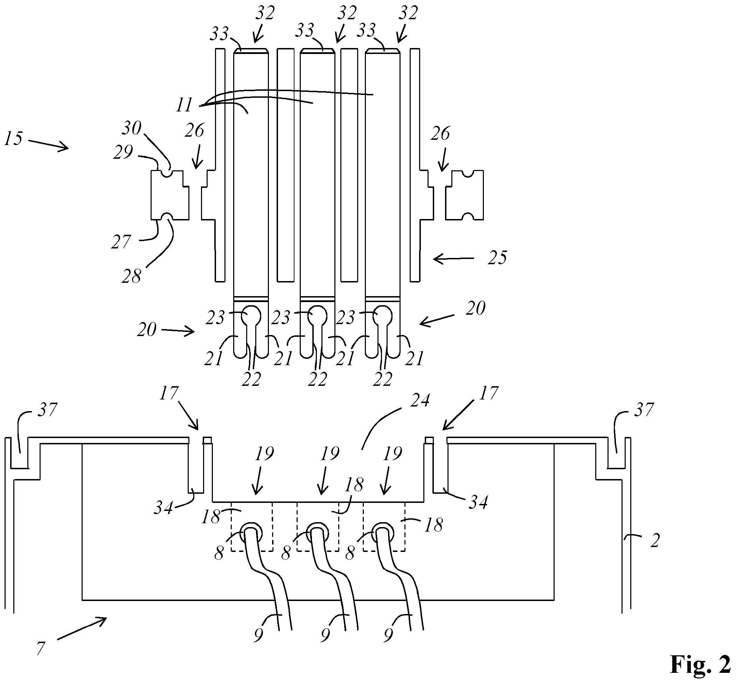

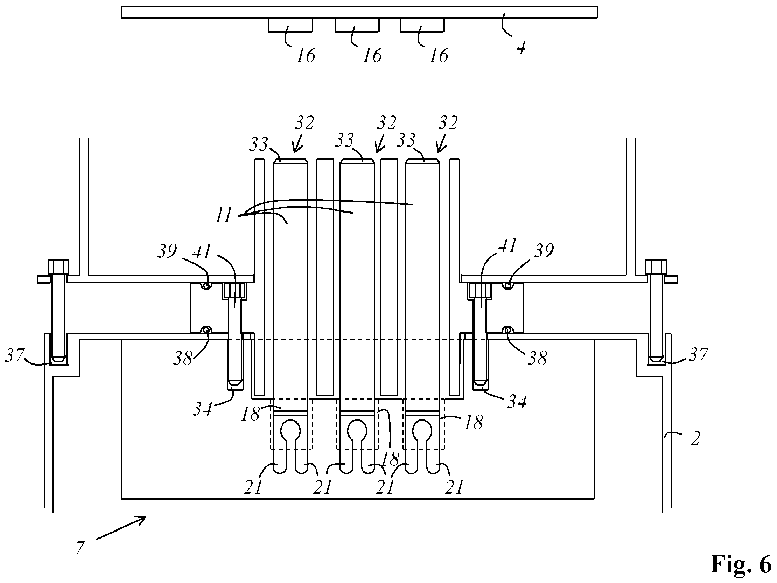

Die Figuren 2 bis 8 zeigen jeweils eine Detailansicht eines zweiten Ausführungsbeispiels einer erfindungsgemäßen Antriebsvorrichtung, wobei der Elektromotor jeweils nicht eingezeichnet ist.

Die Antriebsvorrichtung gemäß dem zweiten Ausführungsbeispiel weist ein Elektromotorgehäuse 2 mit einer Öffnung 10 auf. Seitlich neben der Öffnung 10 sind Bohrungen 17 für (in Figur 2 nicht dargestellte) Befestigungsschrauben 41 vorhanden. An der Innenseite des Elektromotorgehäuses 2 ist ein Leitungselementaufnahmebauteil 7 angeordnet, das mehrere (senkrecht zur Zeichenebene verlaufende) Leitungskanäle 8 aufweist. Durch jeden der Leitungskanäle 8 verläuft ein elektrisches Leitungselement 9, das an den (in den Figuren 2 bis 8 nicht dargestellten) Elektromotor 1 angeschlossen ist und zur Versorgung des Elektromotors 1 mit elektrischer Energie dient. Jeder der Leitungskanäle 8 verläuft durch einen Zugangskanal 18. Die Längserstreckung des jeweiligen Kabeltunnels 8 ist senkrecht zum Verlauf des jeweiligen Zugangstunnels 18 ausgerichtet. Die Zugangskanäle 18 weisen jeweils eine Zugangstunnelöffnung 19 auf, die zur Öffnung 10 des Elektromotogehäuses 2 hin ausgerichtet sind.

Beim Zusammenbau des zweiten Ausführungsbeispiels der erfindungsgemäßen Antriebsvorrichtung wird als erstes ein Steckergehäuse 15, in dem elektrisch leitende Kontaktelemente 11 fixiert sind, angekoppelt. Jedes der Kontaktelemente 11 weist an seinem freien Ende 20 wenigstens zwei Zinken 21 auf. Die Zinken 21 weisen jeweils eine Reibfläche 22 auf, wobei die Reibflächen 22 einander zugewandt sind. Außerdem weisen die freien Enden 20 der elektrisch leitenden Kontaktelemente 11 Kabelaufnahmen 23 für die elektrischen Leitungselemente 9 auf.

Das Leitungselementaufnahmebauteil 7 weist eine Aufnahme 24 auf, in die ein Vorsprung 25 des Steckergehäuses 15 formflüssig und/oder klemmend und/oder rastend eingesteckt werden kann. Außerdem weist das Steckergehäuse 15 Schraubenaufnahmen 26 für die Befestigungsschrauben 41 auf.

Beim Ankoppeln des Steckergehäuses 15 an das Leitungselementaufnahmebauteil 7 wird der Vorsprung 25 durch die Öffnung 10 hindurch in die Aufnahme 24 eingesteckt, wodurch automatisch die freien Enden 20 der elektrisch leitenden Kontaktelemente 11 in die Zugangskanäle 18 eingeführt werden. Die Reibflächen 22 der Zinken 21 entfernen hierbei in einem Teilbereich die elektrische Isolierung des jeweiligen elektrischen Leitungselements 9, so dass ein elektrisch leitender Kontakt zwischen den Kontaktelementen 11 und den elektrischen Leitungselementen 9 hergestellt wird. Wenn das Steckergehäuse 15 vollständig eingesteckt ist, befinden sich die elektrischen Leiter der elektrischen Leitungselemente 9 in den Kabelaufnahmen 23.

Das Steckergehäuse 15 weist eine erste Anlagefläche 27 auf, die der Außenseite des Elektromotorgehäuses 2 zugewandt ist. Die erste Anlagefläche 27 weist eine umlaufende Nut 28 für einen (in Figur 2 nicht dargestellten) ersten Dichtungsring 38 auf.

Das Steckergehäuse 15 weist außerdem eine zweite Anlagefläche 29 auf, die im Endeinbauzustand der Außenseite des Steuergerätgehäuses 5, das in Figur 2 nicht dargestellt ist, zugewandt ist. Die zweite Anlagefläche 29 weist eine umlaufende zweite Nut 30 für einen zweiten Dichtungsring 39 auf.

Die anderen Enden 32 der elektrisch leitenden Kontaktelemente 11 weisen jeweils eine Schneide 33 auf und sind dazu ausgebildet, jeweils in einen (in Figur 2 nicht dargestellten) Leiterplattensteckverbinder 16 eingesteckt zu werden.

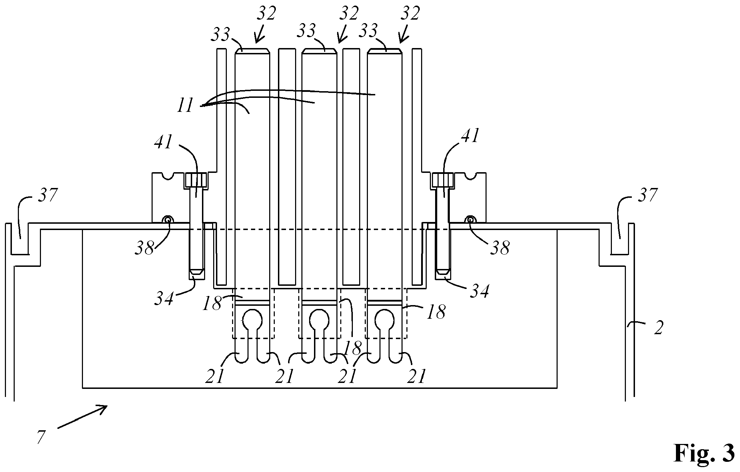

Figur 3 zeigt den Zustand nach dem Ankoppeln des Steckergehäuses 15 an das Leitungselementaufnahmebauteil 7. Das Steckergehäuse 15 ist mittels Befestigungsschrauben 41 befestigt, die durch die Bohrungen 17 des Elektromotorgehäuses 2 verlaufen und in Schraubaufnahmeausnehmungen 34 des Ankoppelelements 7 eingeschraubt sind. Bei den Befestigungsschrauben 41 kann es sich insbesondere um selbstschneidende Befestigungsschrauben handeln. Die Schraubaufnahmen 26 sind derart ausgebildet, dass die Schraubenköpfe der Befestigungsschrauben 41 relativ zur zweiten Anlagefläche 41 versenkt sind.

Der besseren Übersichtlichkeit halber sind die elektrischen Leitungselemente 9 in den Figuren 3 bis 8 nicht dargestellt.

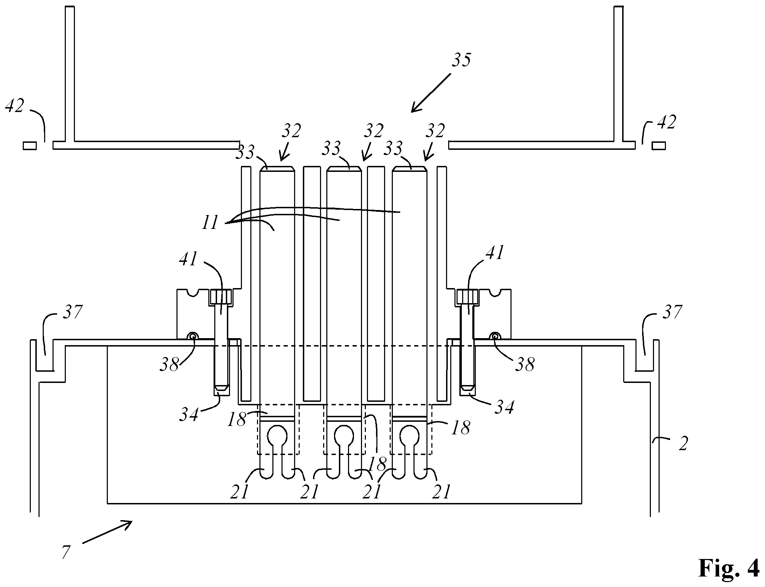

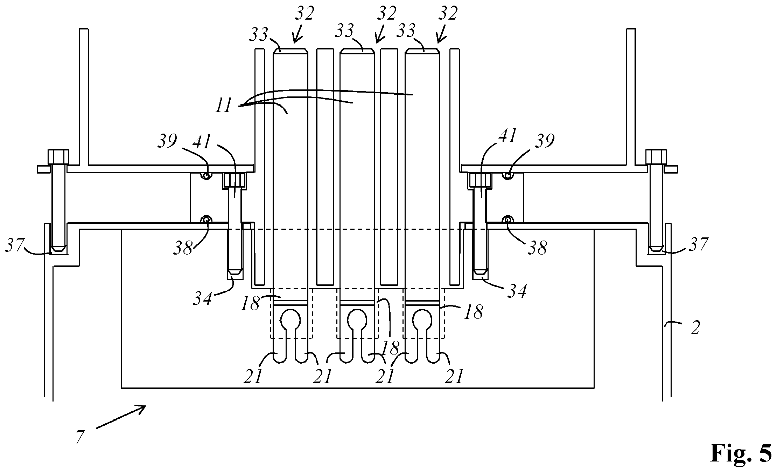

In einem nächsten Schritt wird ein Steuergerätgehäuse an dem Elektromotorgehäuse 2 befestigt. Das Steuerungsgehäuse 5 weist eine Steuerungsgehäuseöffnung 35 für das Steckergehäuse 15 und die Ankoppelelemente 11 auf. Darüber hinaus weist das Steuergerätgehäuse 5 Durchgangsbohrungen 42 für weitere Befestigungsschrauben 36 auf. Die (in Figur 4 nicht dargestellten) weiteren Befestigungsschrauben 36 können in Schraubaufnahmen 37 des Elektromotorgehäuses 2 eingeschraubt werden, was in Figur 5 dargestellt ist.

Figur 5 zeigt die Situation nach dem Befestigen des Steuergerätgehäuses 5 an das Elektromotorgehäuse 2. Das Innere des Elektromotorgehäuses 2 und die Außenumgebung sind durch den ersten Dichtungsring 38 drucktechnisch voneinander isoliert, so dass ein Druckunterschied von mehreren Bar möglich ist. Ebenso ist das Innere des Steuergerätgehäuses 5 mittels des zweiten Dichtungsrings 39 hinsichtlich Druckschwankungen von der Außenumgebung drucktechnisch isoliert.

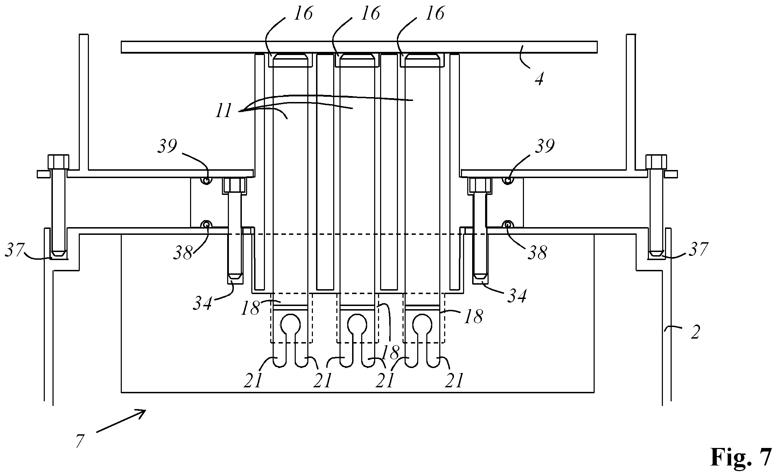

In einem nächsten Schritt erfolgt das Ankoppeln des Steuergeräts 3, die eine Platine 4 aufweist. Die Platine 4 trägt (nicht dargestellte) elektronische Bauteile und außerdem Leiterplattensteckverbinder 16, in die die anderen Enden 32 der Kontaktelemente 11 eingesteckt werden, was in Figur 7 dargestellt ist. Auf diese Weise wird eine elektrisch leitende Verbindung von des Steuergeräts 3 zu den elektrischen Kabeln 9 und damit zu dem Elektromotor 1 hergestellt. Das Steuergerät 3 ist somit in der Lage, den (nicht dargestellten) Elektromotor 1 zu steuern. Das Steuergerät 3 kann beispielsweise die Antriebsleistung des Elektromotors steuern. Darüber hinaus ist es möglich, dass das Steuergerät den Elektromotor 1 in Abhängigkeit und/oder unter Berücksichtigung einer im Inneren des Elektromotorgehäuses 2 mittels eines (nicht dargestellten) Temperatursensors gemessenen Temperatur steuert.

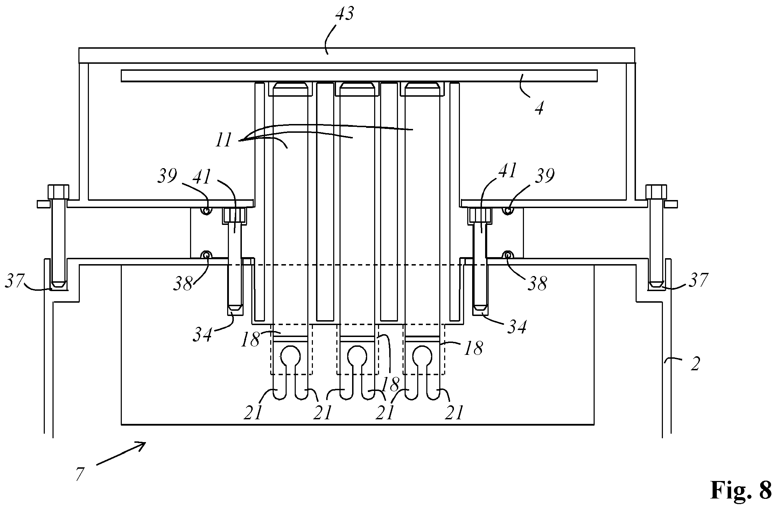

In einem letzten Schritt wird das Steuerungsgehäuse 5 mittels eines Steuerungsgehäusedeckels 43 verschlossen, was in Figur 8 dargestellt ist.

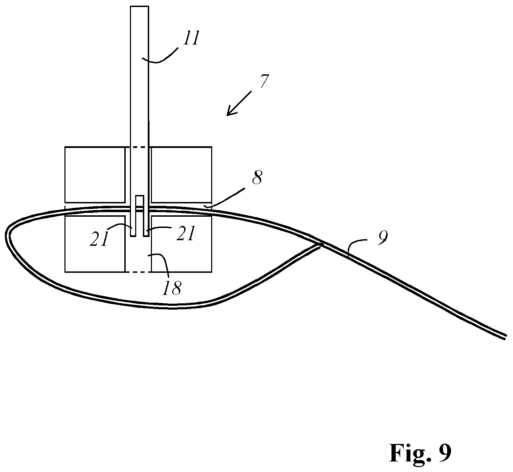

Figur 9 zeigt eine Detailansicht eines dritten Ausführungsbeispiels einer erfindungsgemäßen Antriebsvorrichtung. Das dritte Ausführungsbeispiel weist ein Leitungselementaufnahmebauteil 7 auf, durch das ein Leitungskanal 8 verläuft. Durch den Leitungskanal 8 ist ein elektrisches Leitungselement 9 gelegt, wobei das elektrische Leitungselement 9 in einer Schlaufe verläuft. Dies bedeutet, dass das Ende des elektrischen Kabels 9 leitend mit einem Zwischenabschnitt des elektrischen Kabels 9 verbunden ist. Dies ist besonders vorteilhaft in Bezug auf die Sicherheit der Antriebsvorrichtung insbesondere hinsichtlich möglicherweise auftretender Vibrationen. Darüber hinaus wird hierdurch die thermische und elektrische Anbindung verbessert.

Das Leitungselementaufnahmebauteil 7 weist außerdem einen Zugangskanal 18 auf, der senkrecht zu dem Leitungskanal 8 verläuft. In dem Zugangskanal 18 ist ein elektrisch leitendes Kontaktelement 11 angeordnet, das an seinem Ende zwei Paare von Zinken (also insgesamt vier Zinken) aufweist. Die Zinken 21 weisen jeweils eine zu dem elektrischen Leitungselement 9 hin ausgerichtete (in dieser Figur nicht sichtbare) Reibfläche 22 auf, die dazu dient, beim Einführen des Kontaktelements 11 die elektrische Isolierung des elektrischen Kabels 9 im Bereich der Zinken 21 zu entfernen, so dass ein elektrisch leitender Kontakt hergestellt wird.

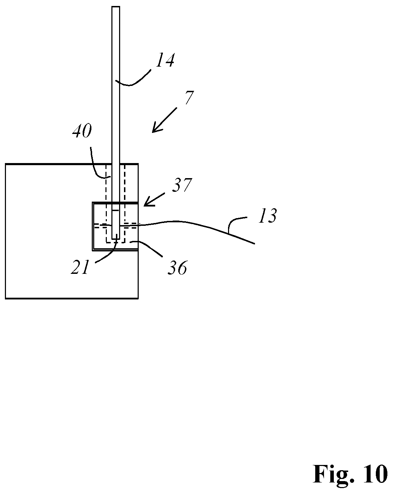

Figur 10 zeigt das Leitungselementaufnahmebauteil 7 in einer anderen Querschnittsebene. Es ist ein weiteres Kontaktelement 14 vorhanden, das in einen weiteren Zugangskanal 40 ragt und das an seinem Ende zwei gabelförmige Zinken 21 aufweist, zwischen denen innerhalb des Ankoppelelements 7 ein weiteres elektrisches Leitungselement 13 derart elektrisch leitend eingeklemmt ist, dass eine elektrische Verbindung zwischen dem weiteren Leitungselementaufnahmebauteil 14 und dem weiteren elektrischen Leitungselement 13 entsteht. Die Zinken 21 des weiteren Ankoppelelements 14 weisen zu dem weiteren elektrischen Leitungselement 13 hin ausgerichtete Schneidkanten auf, die beim Einführen des weiteren Kontaktelements 14 die Isolierung des weiteren elektrischen Kabels 13 durchschneiden, um eine elektrisch leitende Verbindung des weiteren elektrischen Kabels 14 zu dem weiteren Kontaktelement 14 herzustellen. Das weitere elektrische Leitungselement 13 ist in einen Stecker 36 fixiert, welcher in eine Steckaufnahme 37 des Ankoppelelements 7 eingesteckt ist. Ein Teil des weiteren Zugangskanals 40 verläuft daher in dem Stecker 36.

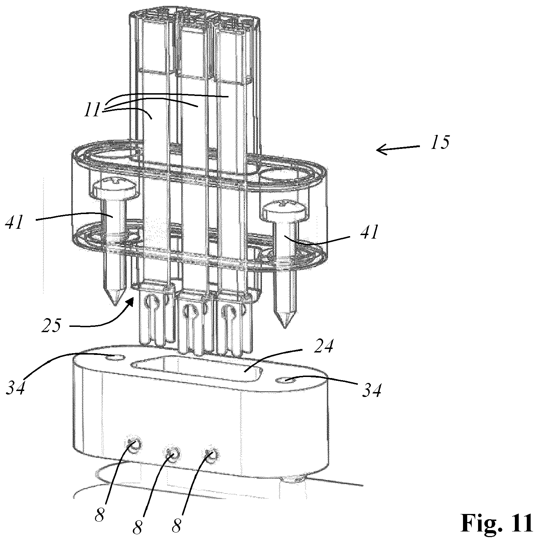

Die Figuren 11 bis 15 zeigen Detailansichten eines vierten Ausführungsbeispiels einer erfindungsgemäßen Antriebsvorrichtung.

Figur 11 zeigt ein Leitungselementaufnahmebauteil 7, das mehrere parallel zueinander verlaufende Kabeltunnel 8 für jeweils ein (in dieser Figur nicht dargestelltes) elektrisches Leitungselement 9 aufweist. Die Kabeltunnel 8 verlaufen vollständig durch das Leitungselementaufnahmebauteil 7 hindurch, so dass die elektrischen Leitungselemente 9 in eine Schlaufe gelegt werden können, wobei jeweils das Ende des elektrischen Kabels 9 leitend mit einem Zwischenabschnitt des elektrischen Kabels verbunden wird.

Das Leitungselementaufnahmebauteil 7 weist eine Aufnahme 24 auf, in die ein Vorsprung 25 des Steckergehäuses 15 formschlüssig und/oder klemmend und/oder rastend eingesteckt werden kann.

Das Leitungselementaufnahmebauteil 7 weist außerdem Schraubaufnahmeausnehmungen 34 zum Einschrauben von Befestigungsschrauben 41 auf.

Das Leitungselementaufnahmebauteil 7 und das Steckergehäuse 15 können beispielsweise jeweils aus Kunststoff, insbesondere jeweils in einem Kunststoffspritzgussverfahren, hergestellt sein.

In dem Steckergehäuse 15 sind elektrisch leitende Kontaktelemente 11 angeordnet. Darüber hinaus sind in dem Steckergehäuse 15 zwei weitere elektrisch leitende Kontaktelemente 14 angeordnet, die jedoch aufgrund der perspektivischen Darstellung in Figur 11 nicht zu sehen sind. Die elektrischen Kontaktelemente 11 sind in einer ersten gemeinsamen Ebene, nebeneinander liegend angeordnet und parallel zueinander ausgerichtet. In einer dazu parallelen Ebene (dahinter) sind die beiden weiteren elektrischen Kontaktelemente 14 angeordnet. Die weiteren elektrischen Kontaktelemente 14 sind parallel zueinander und parallel zu den elektrischen Kontaktelementen 11 angeordnet.

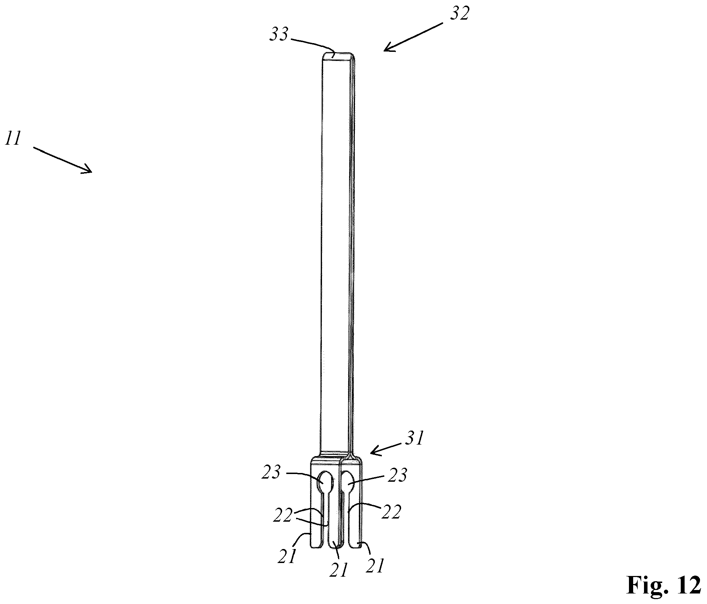

Figur 12 zeigt eines der elektrischen Kontaktelemente 11.

Das elektrische Kontaktelement weist an seinem freien Ende zwei Paare von Zinken 21 (also insgesamt vier Zinken 21) auf. Die Zinken 21 weisen jeweils eine Reibfläche 22 auf, wobei die Reibflächen 22 jeweils eines Paares einander zugewandt sind. Die Reibflächen 22 dienen dazu, beim Aufstecken die elektrische Isolierung eines elektrischen Kabels 9 im Bereich der Zinken 21 zu entfernen. Das Kontaktelement weist außerdem eine Kabelaufnahme 23 auf, in der der elektrisch leitende Kern des elektrischen Kabels 9 in der Endstellung angeordnet und eingeklemmt ist.

Das andere Ende 32 des Kontaktelements 11 weist eine Schneide 33 auf, was das Einstecken in einen Steckverbinder, insbesondere in einen Leiterplattensteckverbinder 16, erleichtert.

Das Kontaktelement 11 ist als Blechstanzteil und Blechbiegeteil hergestellt. Zunächst wird ein Stanzteil hergestellt, das im Wesentlichen H-förmig ausgebildet ist, wobei die beiden Schenkel des "H" zueinander identisch sind. Jeder Schenkel des H weist am unteren Ende zwei der Zinken 21 auf. In einem nächsten Schritt erfolgt ein doppeltes Umbiegen kurz oberhalb der Zinken. Anschließend werden die beiden Schenkel des "H" aufeinander gelegt, wobei der die Schenkel verbindende Abschnitt (Querstrich des H) um 180° umgebogen wird. Durch die doppelte Umbiegung 31 weisen die Paare von Zinken 21 im Endergebnis einen Abstand zueinander auf.

In einem weiteren Schritt wird die Schneide 33 am anderen Ende, beispielsweise durch Schleifen oder Fräsen, ausgebildet.

Das Kontaktelement 11 kann insbesondere eine galvanisch aufgebrachte Beschichtung aufweisen. Hierdurch wird das Kontaktelement vor äußeren Einflüssen, insbesondere vor Korrosion, geschützt.

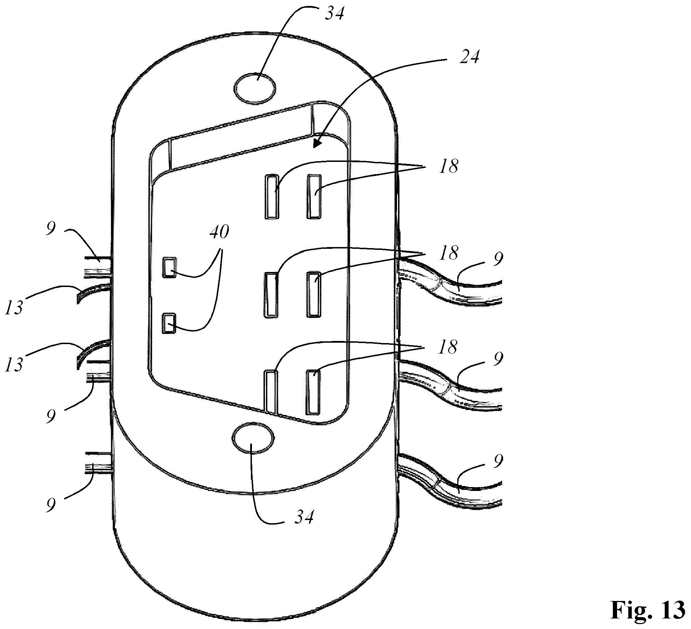

Figur 13 zeigt das Leitungselementaufnahmebauteil 7 in einer anderen perspektivischen Darstellung, wobei auch die elektrischen Leitungselemente 9 eingezeichnet sind, die durch die Kabeltunnel 8 hindurch verlaufen.

In Figur 13 sind außerdem die sechs gleichen Zugangskanäle 18 für die Kontaktelemente 11 und zwei weiteren Zugangskanäle 40 für die weiteren Kontaktelemente 14 zu erkennen. Darüber hinaus zeigt die Figur 13 die Aufnahme 24 für den Vorsprung 25 des Steckergehäuses 15 sowie die Schraubaufnahmeausnehmungen 34.

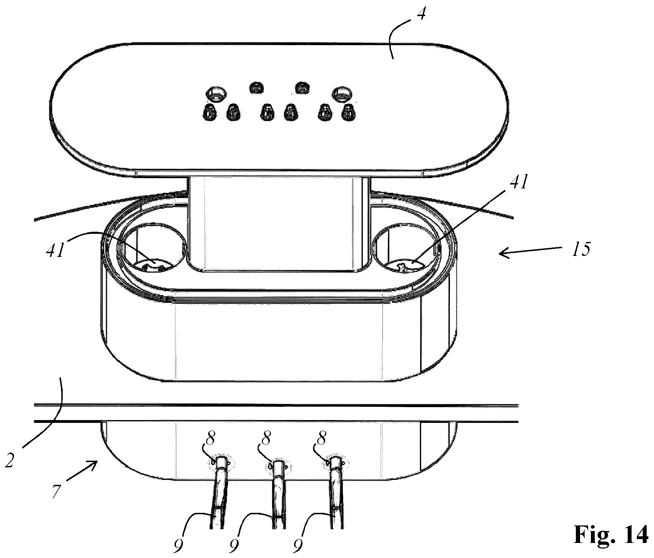

Figur 14 zeigt schematisch Details des Endeinbauzustandes, in dem das Steckergehäuse 15 mittels der Befestigungsschrauben 41 mit dem Leitungselementaufnahmebauteil 7 fest mechanisch verbunden ist. Die Wandung des Elektromotorgehäuses 2 ist hierbei zwischen dem Leitungselementaufnahmebauteil 7 und der ersten Anlagefläche 27 des Steckergehäuses 15 eingeklemmt. Am anderen Ende des Steckergehäuses 15 befindet sich die Platine 4 des Steuergeräts 3 (die in dieser Figur nicht sichtbare) Leiterplattensteckverbinder 16 aufweist, die auf die anderen Enden 32 der Kontaktelemente 11 aufgesteckt sind. Die Platine 4 befindet sich in einem (in dieser Figur nicht dargestellten) Steuergerätgehäuse 5.

### Bezugszeichenliste:

- 1: Elektromotor
- 2: Elektromotorgehäuse
- 3: Steuergerät
- 4: Platine
- 5: Steuergerätgehäuse
- 6: Befestigungsmittel
- 7: Leitungselementaufnahmebauteil
- 8: Leitungskanal
- 9: elektrisches Leitungselement
- 10: Öffnung
- 11: elektrisches Kontaktelement
- 12: Sensor
- 13: weiteres elektrisches Leitungselement
- 14: weitere Kontaktelemente
- 15: Steckergehäuse
- 16: Leiterplattensteckverbinder
- 17: Bohrungen
- 18: Zugangskanal
- 19: Zugangstunnelöffnung
- 20: freies Ende
- 21: Zinken
- 22: Reibfläche
- 23: Kabelaufnahme
- 24: Aufnahme
- 25: Vorsprung
- 26: Schraubaufnahme
- 27: erste Anlagefläche
- 28: erste Nut
- 29: zweite Anlagefläche
- 30: zweite Nut
- 31: doppelte Umbiegung
- 32: anderes Ende
- 33: Schneide
- 34: Schraubaufnahmeausnehmung
- 35: Steuerungsgehäuseöffnung
- 36: Befestigungsschraube
- 37: Schraubaufnahmen
- 38: erster Dichtungsring
- 39: zweiter Dichtungsring
- 40: weiterer Zugangskanal
- 41: Befestigungsschrauben
- 42: Durchgangsbohrung
- 43: Steuerungsgehäusedeckel

## Patentansprüche

1. Antriebsvorrichtung mit einem Elektromotor, der in einem Elektromotorgehäuse angeordnet ist, und mit einem Steuergerät, das in einem Steuergerätgehäuse außerhalb des Elektromotorgehäuses, insbesondere unmittelbar auf oder unmittelbar an dem Elektromotorgehäuse, angeordnet ist, **dadurch gekennzeichnet, dass** an der Innenseite des Elektromotorgehäuses ein Leitungselementaufnahmebauteil angeordnet ist, das mehrere Leitungskanäle aufweist, durch die jeweils ein elektrisches Leitungselement, insbesondere jeweils ein Wicklungsdraht des Elektromotors, verläuft, wobei in jeden der Leitungskanäle jeweils ein durch eine Öffnung des Elektromotorgehäuses ragendes elektrisch leitendes Kontaktelement ragt, das an seinem freien Ende wenigstens zwei Zinken aufweist, zwischen denen das jeweilige elektrische Leitungselement eingeklemmt ist.

2. Antriebsvorrichtung nach Anspruch 1, **dadurch gekennzeichnet, dass**
a. in jeden der Leitungskanäle ein Zugangskanal mündet, durch den jeweils eines der Kontaktelemente verläuft, und/oder dass
b. das Leitungselementaufnahmebauteil als Kunststoffspritzgussteil hergestellt ist, und/oder dass

3. Antriebsvorrichtung nach Anspruch 1 oder 2, **dadurch gekennzeichnet, dass**
a. die Kontaktelemente in einem Steckergehäuse fixiert sind, und/oder dass
b. die Kontaktelemente in einem Steckergehäuse fixiert sind und das Leitungselementaufnahmebauteil eine Aufnahme aufweist, in die ein Vorsprung des Steckergehäuses formschlüssig und/oder klemmend und/oder rastend eingesteckt ist, und/oder dass
c. die Kontaktelemente in einem als Kunststoffspritzgussteil hergestellten Steckergehäuse fixiert sind, und/oder dass
d. die Kontaktelemente in einem Steckergehäuse fixiert sind, das in einem Kunststoffspritzgussverfahren hergestellt ist, das ein Umspritzen der Kontaktelemente beinhaltet, und/oder dass
e. die Kontaktelemente in einem Steckergehäuse fixiert sind, das wenigstens ein Verbindungselement, insbesondere ein Rastelement oder wenigstens einen Niet, aufweist, das mit einem Gegenverbindungselement des Leitungselementaufnahmebauteils zusammen wirkt, und/oder dass
f. die Kontaktelemente in einem Steckergehäuse fixiert sind, das wenigstens eine Schraubenaufnahme für eine Befestigungsschraube aufweist, die durch eine Bohrung in dem Elektromotorgehäuse verläuft und in das Leitungselementaufnahmebauteil eingeschraubt ist, und/oder dass
g. die Kontaktelemente in einem Steckergehäuse fixiert sind, das eine erste Anlagefläche aufweist, die der Außenseite des Elektromotorgehäuses zugewandt ist, und/oder dass
h. die Kontaktelemente in einem Steckergehäuse fixiert sind, das eine erste Anlagefläche aufweist, die der Außenseite des Elektromotorgehäuses zugewandt ist, wobei die erste Anlagefläche eine Nut aufweist, in der eine Dichtung, insbesondere ein Dichtungsring, angeordnet ist, und/oder dass
i. die Kontaktelemente in einem Steckergehäuse fixiert sind, das eine zweite Anlagefläche aufweist, die der Außenseite des Steuergerätgehäuses zugewandt ist, und/oder dass
j. die Kontaktelemente in einem Steckergehäuse fixiert sind, das eine zweite Anlagefläche aufweist, die der Außenseite des Steuergerätgehäuses zugewandt ist, wobei die zweite Anlagefläche eine Nut aufweist, in der eine Dichtung, insbesondere ein Dichtungsring, angeordnet ist.

4. Antriebsvorrichtung nach einem der Ansprüche 1 bis 3, **dadurch gekennzeichnet, dass**
a. mehrere der Leitungselemente, insbesondere genau drei der Leitungselemente, Wicklungsdrähte des Elektromotors sind oder Leitungen, insbesondere Drähte, sind, die mit den Wicklungsdrähten des Elektromotors, insbesondere des Stators des Elektromotors, elektrisch leitend verbunden sind, und/oder dass
b. mehrere der Leitungselemente, insbesondere genau zwei der Leitungselemente, Signalleitungen sind, und/oder dass
c. mehrere der Leitungselemente, insbesondere genau zwei der Leitungselemente, Signalleitungen sind, die an einen in dem Elektromotorgehäuse angeordneten Sensor, insbesondere an einen Temperatursensor, angeschlossen sind, und/oder dass
d. mehrere der Leitungselemente, insbesondere genau zwei der Leitungselemente, Signalleitungen sind und ein Ende jeder Signalleitung in einem Stecker fixiert ist, der in eine Steckeraufnahme des Leitungselementaufnahmebauteils eingesteckt ist.

5. Antriebsvorrichtung nach einem der Ansprüche 1 bis 4, **dadurch gekennzeichnet, dass** die Kontaktelemente an ihren freien Enden jeweils mehrere, insbesondere genau zwei, Paare von Zinken aufweisen, zwischen denen jeweils das jeweilige elektrische Leitungselement eingeklemmt ist.

6. Antriebsvorrichtung nach einem der Ansprüche 1 bis 5, **dadurch gekennzeichnet, dass**
a. die Zinken jeweils eine, insbesondere zu dem Leitungselement hin ausgerichtete, Schneidkante oder jeweils eine, insbesondere zu dem Leitungselement hin ausgerichtete, Reibfläche aufweisen, und/oder dass
b. die Kontaktelemente aus einem Metall oder einer Metalllegierung hergestellt sind, und/oder dass
c. die Kontaktelemente eine, insbesondere metallische, Beschichtung aufweisen, und/oder dass
d. die Kontaktelemente eine galvanisch aufgebrachte Beschichtung, insbesondere eine galvanisch aufgebrachte Nickelbeschichtung, aufweisen.

7. Antriebsvorrichtung nach einem der Ansprüche 1 bis 6, **dadurch gekennzeichnet, dass**
a. die Kontaktelemente als Blechstanzteile und/oder Blechbiegeteile, insbesondere aus einem Blech einer Dicke von 0,5 mm bis 2 mm, ausgebildet sind, und/oder dass
b. jedes Kontaktelement einstückig aus einem einzigen Stück Rohmaterial, insbesondere aus einem Blech, hergestellt ist, und/oder dass
c. jedes Kontaktelement aus einem H-förmigen Blechteil, insbesondere durch Biegen, hergestellt ist, und/oder dass
d. jedes Kontaktelement aus einem H-förmigen Blechteil, insbesondere durch Biegen, hergestellt ist und zwei zueinander spiegelsymmetrisch angeordnete Schenkel aufweist, und/oder dass
e. jedes Kontaktelement aus einem H-förmigen Blechteil, insbesondere durch Biegen, hergestellt ist und zwei zueinander spiegelsymmetrisch angeordnete Schenkel aufweist, wobei die freien Enden der Schenkel, die die Zinken aufweisen, jeweils eine doppelte Umbiegung aufweisen, und/oder dass die Zinken eines Kontaktelements voneinander beabstandet sind.

8. Antriebsvorrichtung nach einem der Ansprüche 1 bis 7, **dadurch gekennzeichnet, dass**
a. jedes Kontaktelement an seinem anderen Ende eine Schneide aufweist, und/oder dass
b. die Kontaktelemente, insbesondere hinsichtlich ihrer Längserstreckungsrichtung, parallel zueinander angeordnet sind.

9. Antriebsvorrichtung nach einem der Ansprüche 1 bis 8, **dadurch gekennzeichnet, dass**
a. die anderen Enden der Kontaktelemente und/oder der weiteren Kontaktelemente jeweils in einen Steckverbinder des Steuergeräts eingesteckt sind, und/oder dass
b. die anderen Enden der Kontaktelemente und/oder der weiteren Kontaktelemente jeweils in einen Steckverbinder des Steuergeräts eingesteckt sind, wobei die Steckverbinder als Leiterplattensteckverbinder ausgebildet, auf einer Platine, die elektronische Bauteile trägt, des Steuergeräts befestigt sind, und/oder dass
c. die Kontaktelemente und/oder die weiteren Kontaktelemente und/oder das Steckergehäuse durch eine Öffnung des Steuergerätgehäuses verlaufen.

10. Antriebsvorrichtung nach einem der Ansprüche 1 bis 9, **dadurch gekennzeichnet, dass** das Steuergerätgehäuse, insbesondere unbeweglich und/oder zerstörungsfrei wieder lösbar, an dem Elektromotorgehäuse befestigt ist.

11. Antriebsvorrichtung nach einem der Ansprüche 1 bis 10, **dadurch gekennzeichnet, dass** das Steuergerät einen Wechselrichter, insbesondere einen dreiphasigen Wechselrichter, beinhaltet.

12. Verdichtersystem zur Drucklufterzeugung, das eine Pumpe und eine Antriebsvorrichtung nach einem der Ansprüche 1 bis 11 aufweist, die die Pumpe antreibt.

13. Bremssystem für ein Kraftfahrzeug, insbesondere für einen Lastkraftwagen, das eine Antriebsvorrichtung nach einem der Ansprüche 1 bis 11 oder ein Verdichtersystem nach Anspruch 12 aufweist.

14. Kraftfahrzeug, das ein Bremssystem nach Anspruch 13 oder ein Verdichtersystem nach Anspruch 12 oder eine Antriebsvorrichtung nach einem der Ansprüche 1 bis 11 aufweist.

15. Kraftfahrzeug nach Anspruch 14, **dadurch gekennzeichnet, dass** das Kraftfahrzeug ein Elektrofahrzeug, insbesondere ein elektrisch angetriebenes Straßenfahrzeug, ist.
